(19) Europäisches Patentamt
European Patent Office
Office européen des brevets

(11) EP 2 237 630 A2

# (12) EUROPEAN PATENT APPLICATION

(43) Date of publication:
**06.10.2010 Bulletin 2010/40**

(51) Int Cl.:
***H04W 72/04** (2009.01)*

(21) Application number: **10152255.5**

(22) Date of filing: **01.02.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **31.03.2009 CN 200910133604**

(71) Applicant: **NTT DoCoMo, Inc.**
**Chiyoda-ku (JP)**

(72) Inventors:
- **Liu, Fang**
  **100190, Beijing (CN)**
- **She, Xiaoming**
  **100190, Beijing (CN)**
- **Chen, Lan**
  **100190, Beijing (CN)**

(74) Representative: **Schoppe, Fritz et al**
**Schoppe, Zimmermann, Stöckeler & Zinkler**
**Patentanwälte**
**Postfach 246**
**82043 Pullach bei München (DE)**

## (54) Method and apparatus for resource scheduling in uplink transmission

(57) A method and an apparatus for resource scheduling are disclosed. In the method, resource blocks are allocated to users according to priority values for each user on each resource block stored in a priority value set. This kind of resource scheduling requires one or more rounds of allocation operations before being finished. After each round of allocation, one or more single-user paths representing corresponding relationships between a user and resource blocks can be found out. During each round of allocation, find a maximum priority value in a current priority value set. The maximum priority value corresponds to a first resource block and a first user. Then, allocate the first resource block to the first user; and determine whether adjacent resource blocks of the first resource block should be allocated to the first user according to an extension threshold; or determine to which user the first resource block should be allocated according to a number of user start-points. The method and apparatus provided by the present invention are able to determine multiple candidate paths and select a preferable path from the candidate paths, thereby increasing spectrum efficiency of an SC-FDMA system.

1
(UE4, RB1)
2
(UE1, RB1)
3
(UE3, RB5)
4
(UE1, RB5)
5
(UE4, RB2)
6
(UE3, RB2)
7
(UE1, RB3)
8
(UE2, RB3)
9
(UE3, RB4)
10
(UE2, RB4)
11
(UE3, RB5)
12
(UE2, RB5)
13
(UE4, RB6)
14
(UE2, RB6)
15
(UE2, RB6)
16
(UE3, RB3)
17
(UE3, RB4)
18
(UE2, RB6)

FIG.4

EP 2 237 630 A2

## Description

### Field of the Invention

The present invention relates to uplink transmission of wireless communication systems, and more particularly, to a method and apparatus for resource scheduling in uplink transmission of a Single Carrier-Frequency Division Multiple Access (SC-FDMA) system.

### Background of the invention

The 3rd generation partnership project (3GPP) is currently working on Long Term Evolution (LTE) of Universal Mobile Telecommunication System (UMTS) Terrestrial Radio Access (UTRA), wherein Single Carrier-Frequency Division Multiple Access (SC-FDMA) has been adopted as an uplink access technique for E-UTRA.

In SC-FDMA system, data are transmitted through a plurality of consecutive and orthogonal sub-carriers. The plurality of sub-carriers is divided into multiple sub-carrier blocks, also referred to as resource blocks (RBs). Each RB consists of multiple consecutive sub-carriers. Currently, as defined by LTE, one RB includes 12 sub-carriers.

A major problem exists in the traditional SC-FDMA system is how to schedule users to obtain higher throughput and effectively utilize resources. As to SC-FDMA system which adopts consecutive sub-carriers allocation, a current scheduling method for uplink transmission is as follows:

First, a base station calculates priority values of all users on all resource blocks and ranks the priority values, finds a maximum priority value among the priority values. It is assumed that resource block A and user 1 correspond to the maximum priority value, then resource block A is allocated to user 1.

Then, determine whether resource block B adjacent to resource block A can be allocated to user 1. If user 1, compared with other users, has a maximum priority value on adjacent resource block B, then allocate adjacent resource block B to user 1; otherwise, do not allocate adjacent resource block B to user 1.

Thereafter, re-rank priority values of remaining users on remaining resource blocks, and allocate the remaining resource blocks to the remaining users in a similar way until all the resource blocks are allocated.

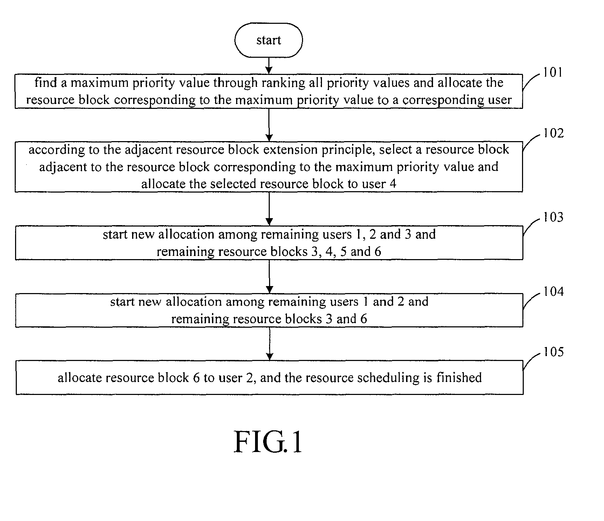

**FIG.1** illustrates a traditional resource scheduling method. In **FIG.1,** suppose the number of users N is 4 and the number of resource blocks M is 6. Matrix C denotes priority values of all users on all resource blocks.

$$C_{N\times M}=\begin{bmatrix} 1 & 1.25 & 1.33 & 0.59 & 0.97 & 1.09 \\ 0.09 & 0.12 & 0.11 & 0.51 & 0.45 & 0.32 \\ 0.75 & 1.19 & 1.07 & 1.35 & 1.44 & 0.81 \\ 1.72 & 1.55 & 0.7 & 0.63 & 1.20 & 1.08 \end{bmatrix}_{N\times M}$$

Step 101: rank all priority values in matrix C to find a maximum priority value and allocate a resource block corresponding to the maximum priority value to a user corresponding to the maximum priority value.

Since the number of users N is 4 and the number of resource blocks M is 6, the number of priority values is N*M=24. Among the 24 priority values, find the maximum priority value 1.72 which is the priority value of user 4 on resource block 1. Therefore, resource block 1 is allocated to user 4.

Step 102: according to an adjacent resource block extension principle, determine, among adjacent resource blocks of the resource block corresponding to the maximum priority value, which adjacent resource block can be allocated to user 4. The adjacent resource blocks refer to those resource blocks consecutive to resource block 1 that can be allocated to a user.

In this example, the adjacent resource block of resource block 1 is resource block 2. Therefore, the determination is firstly performed in respect to resource block 2. Compared with other users, if user 4 has a maximum priority value on this resource block, then the resource block can be allocated to user 4. It can be seen from the second column of matrix C that user 4, compared with users 1, 2 and 3, has the maximum priority value on resource block 2. Therefore, resource block 2 is allocated to user 4.

Since resource block 2 is allocated to user 4, resource block 3 which is adjacent to resource block 2 is further determined. It can be seen that user 1 has a maximum priority value on resource block 3. Therefore, resource block 3 cannot be allocated to user 4. Now, the resource allocation for user 4 is finished.

Step 103: start a new allocation among the remaining users 1, 2 and 3 and the remaining resource blocks 3, 4, 5 and 6. The procedure is similar to that of user 4. At this time, matrix C is equivalent to matrix C1 which is a remaining part of matrix C with the first and the second columns and the fourth row removed (erased by dashed lines).

$$C_{N\times M}=\begin{bmatrix} 1 & 1.25 & 1.33 & 0.59 & 0.97 & 1.09 \\ 0.09 & 0.12 & 0.11 & 0.51 & 0.45 & 0.32 \\ 0.75 & 1.19 & 1.07 & 1.35 & 1.44 & 0.81 \\ 1.72 & 1.55 & 0.7 & 0.63 & 1.20 & 1.08 \end{bmatrix}_{N\times M}$$

It is known by ranking all the priority values in matrix C1 that user 3 has a maximum priority value on resource block 5. Therefore, resource block 5 will be allocated to user 3.

At the same time, compared with other users, user 3 has a maximum priority value on resource block 4. Therefore, resource block 4 is also allocated to user 3. In addition, user 3 does not have a maximum priority value on resource blocks 3 and 6. Therefore, resource blocks 3 and 6 should not be allocated to user 3. Now, the resource allocation to user 3 is finished.

Step 104: start yet another new allocation among the remaining users 1 and 2 and the remaining resource blocks 3 and 6. At this time, matrix C is equivalent to matrix C2 which is a remaining part of matrix C with the first, second, fourth and fifth columns and the third and fourth rows removed (erased by dashed lines).

$$C_{N\times M}=\begin{bmatrix} 1 & 1.25 & 1.33 & 0.59 & 0.97 & 1.09 \\ 0.09 & 0.12 & 0.11 & 0.51 & 0.45 & 0.32 \\ 0.75 & 1.19 & 1.07 & 1.35 & 1.44 & 0.81 \\ 1.72 & 1.55 & 0.7 & 0.63 & 1.20 & 1.08 \end{bmatrix}_{N\times M}$$

It is known by ranking all priority values (4 priority values altogether) in matrix C2 that, user 1 has a maximum priority value on resource block 3. Therefore, resource block 3 is allocated to user 1.

Step 105: allocate resource block 6 to user 2. And the whole resource scheduling procedure is finished.

An allocation result of the scheduling shown in **FIG.1** is as shown in table 1.

Table I corresponding relationships between users and resource blocks

| RB1 | RB2 | RB3 | RB4 | RB5 | RB6 |
|---|---|---|---|---|---|
| User 4 | User 4 | User 1 | User 3 | User 3 | User 2 |

In case that there are not many users, the above traditional scheduling method will result in a lot of unfilled resource blocks after each user is allocated with a resource block, which decreases system throughput to much extent.

## Summary of the Invention

Embodiments of the present invention provide a method and an apparatus for resource scheduling in uplink transmission.

According to an embodiment of the present invention, a method for resource scheduling in uplink transmission is provided. The method includes:

A1. calculating priority values of all users on all resource blocks and saving the priority values into a priority value set;
B1. finding a maximum priority value from the current priority value set, determining a first resource block and a first user corresponding to the maximum priority value, and determining one or more single-user paths according to a predefined extension threshold;

C 1. with respect to each single-user path, allocating the first resource block to the first user, determining whether the first user has a priority value which meets a requirement of the single-user path on one or more adjacent resource blocks of the first resource block, and allocating the adjacent resource block corresponding to the priority value meeting the requirement of the single-user path to the first user;
removing all priority values corresponding to the first user and all priority values corresponding to the resource blocks allocated to the first user from the priority value set;
recording a corresponding relationship between users and resource blocks represented by the single-user path into a candidate path, determining whether a condition to end allocation is met; if the condition is not met, returning to step B1; otherwise, proceeding to step D1; and
D1. selecting a path from one or more candidate paths and performing resource scheduling according to the path selected.

The method further includes:

configuring or updating the extension threshold before performing step B1.

The method of configuring or updating the extension threshold includes:

configuring the extension threshold as not larger than the number of users, or modifying the extension threshold having been configured, wherein the extension threshold is a lowest ranking requirement for the priority value of the first user on one of the adjacent resource blocks among all priority values on the adjacent resource block.

The method of determining one or more single-user paths according to the extension threshold includes: selecting, from 1 to the extension threshold, a value for each single-user path as the lowest ranking requirement; and

determining whether the first user has a priority value which meets the requirement of the single-user path on one or more adjacent resource blocks of the first resource block in step C1 includes: with respect to each adjacent resource block, ranking priority values of all users on the adjacent resource block in a descending order, if the ranking position of the priority value of the first user on the adjacent resource block meets the lowest ranking requirement of the single-user path, determining that the first user has the priority value meeting the requirement of the single-user path.

The extension threshold includes a left extension threshold and a right extension threshold; and
wherein determining one or more single-user paths according to the extension threshold includes: when extending to the left taking the first resource block as a center, selecting, from 1 to the left extension threshold, a value as a left lowest ranking requirement for each single-user path; when extending to the right taking the first resource block as the center, selecting, from 1 to the right extension threshold, a value as a right lowest ranking requirement for each single-user path;
wherein determining whether the first user has a priority value which meets the requirement of the single-user path on one or more adjacent resource blocks of the first resource block in step C1 includes:

with respect to each left adjacent resource block, ranking priority values of all users on the left adjacent resource block, if a ranking position of the priority value of the first user on the left adjacent resource block meets the left lowest ranking requirement selected for the single-user path, determining that the first user has the priority value meeting the requirement of the single-user path;
with respect to each right adjacent resource block, ranking priority values of all users on the right adjacent resource block, if a ranking position of the priority value of the first user on the right adjacent resource block meets the right lowest ranking requirement selected for the single-user path, determining that the first user has the priority value meeting the requirement of the single-user path.

The method further includes:

before allocating the adjacent resource block corresponding to the priority value meeting the requirement of the single-user path to the first user in step C1, determining whether the number of resource blocks allocated to the first user exceeds a maximum number of resource blocks allowed to be allocated to the first user; if exceeds, not allocating the adjacent resource block to the first user.

The condition to end allocation includes: all resource blocks are allocated or all users are allocated with at least one resource block.

The method further includes:

before returning to step B1 in step C1, calculating a sum of priority values of each candidate path, ranking sums of all candidate paths from high to low, reserving one or more candidate paths according to a ranking result and deleting other candidate paths; and
selecting one path from one or more candidate paths and performing resource scheduling according to the selected path in step D1 includes: calculating a sum of priority values of each candidate path, performing the resource scheduling according to corresponding relationships between users and resource blocks configured in the candidate path corresponding to the maximum sum.

The method further includes:

before returning to step B1 in step C1, calculating an average priority value of each candidate path, ranking average priority values of all candidate paths from high to low, reserving one or more candidate paths according to a ranking result and deleting other candidate paths; and
selecting a path from one or more candidate paths and performing resource scheduling according to the path selected in step D1 includes: calculating a sum of priority values of each candidate path, selecting a path with a maximum sum, and performing the resource scheduling according to corresponding relationships between users and resource blocks configured in the path selected.

The method of finding the maximum priority value from the current priority value set in step B1 includes: ranking all priority values currently included in the priority value set, obtaining the maximum priority value according to a ranking result;
wherein the priority value set is a matrix taking one of users and resource blocks as rows and the other as columns and the priority values as elements.
According to another embodiment of the present invention, a method for resource scheduling in uplink transmission is provided. The method includes:

A2. calculating priority values of all users on all resource blocks and saving the priority values in a priority value set;
B2. find a maximum priority value from the current priority value set, determining a first resource block corresponding to the maximum priority value, and determining one or more second users according to a predefined number of user start-points,
wherein each second user corresponds to a first single-user path;
C2. with respect to each first single-user path, allocating the first resource block to the second user, and allocating one or more adjacent resource blocks of the first resource block to the second user according to a ranking position of the priority value of the second user on the one or more adjacent resource blocks;
removing all priority values corresponding to the second user and all priority values corresponding to the resource blocks allocated to the second user from the priority value set;
recording corresponding relationships between the users and the resource blocks expressed by the first single-user path into a candidate path, determining whether a condition to end allocation is met, if the condition is not met, returning to step B2; otherwise, proceeding to step D2; and
D2. determining a path from one or more candidate paths, and performing resource scheduling according to the path determined.

The method further includes: configuring or updating the number of user start-points before performing step B2.
The method of determining one or more second users according to the number of user start-points includes:

determining users whose priority values are ranked in the Nth or above on the first resource block among all the priority values as the second users, wherein N equals to the number of user start-points.

The method of allocating one or more adjacent resource blocks of the first resource block to the second user according to a ranking position of the priority value of the second user on the one or more adjacent resource blocks includes:

with respect to each adjacent resource block, ranking the priority values of all users on the adjacent resource block, if the priority value of the second user is maximum on the adjacent resource block, allocating the adjacent resource block to the second user.

The method of allocating one or more adjacent resource blocks of the first resource block to the second user according to a ranking position of the priority value of the second user on the one or more adjacent resource blocks includes:

with respect to each adjacent resource block, determining one or more second single-user paths according to a predefined extension threshold;
with respect to each second single-user path, determining whether the second user has a priority value which meets a requirement of the second single-user path on the adjacent resource block, if the second user has the priority value which meets the requirement of the second single-user path on the adjacent resource block, allocating the adjacent resource block to the second user, and recording corresponding relationships between the user and the resource blocks expressed by the second single-user path into a corresponding first single-user path.

The method further includes: before returning to step B2 in step C2, calculating a sum of priority values of each candidate path, ranking sums of all candidate paths from high to low, reserving one or more candidate paths according to a ranking result and deleting other candidate paths; and
determining a path from the one or more candidate paths and performing resource scheduling according to the path determined in step D2 includes: calculating a sum of priority values of each candidate path, performing the resource scheduling according to the corresponding relationships between users and resource blocks recorded in the candidate path with the maximum sum of priority values.
The method further includes: before returning to step B2 in step C2, calculating an average priority value of each candidate path, ranking average priority values of all candidate paths from high to low, reserving one or more candidate paths according to a ranking result and deleting other candidate paths; and
determining a path from one or more candidate paths and performing resource scheduling according to the path determined in step D2 includes: calculating a sum of priority values of each candidate path, selecting a candidate path with the maximum sum, and performing the resource scheduling according to the corresponding relationships between users and resource blocks recorded in the candidate path selected.
According to yet another embodiment of the present invention, an apparatus for resource scheduling in uplink transmission is provided. The apparatus includes:

a priority value calculating unit, adapted to calculate priority values of all users on all resource blocks, and save the priority values in a priority value set;
a multi-path configuring unit, adapted to find a maximum priority value from the current priority value set, determine a first resource block and a first user corresponding to the maximum priority value, and determine one or more single-user paths according to a predefined extension threshold;
a resource pre-allocating unit, adapted to allocate, with respect to each single-user path, the first resource block to the first user, determine whether the first user has a priority value which meets a requirement of the single-user path on one or more adjacent resource blocks of the first resource block, allocate the adjacent resource blocks corresponding to the priority values meeting the requirement of the single-user path to the first user; remove all the priority values corresponding to the first user and all the priority values corresponding to the resource blocks allocated to the first user from the priority value set, record corresponding relationships between the user and the resource blocks expressed by the single-user path into a candidate path, and determine whether a condition to end allocation is met, trigger the multi-path configuring unit if the condition is met and trigger a schedule executing unit if the condition is not met; and
the schedule executing unit, adapted to determine a path from one or more candidate paths and perform resource scheduling according to the determined path.

According to yet another embodiment of the present invention, an apparatus for resource scheduling in uplink transmission is provided. The apparatus includes:

a priority value calculating unit, adapted to calculate priority values of all users on all resource blocks and save the priority values in a priority value set;
a multi-path configuring unit, adapted to find a maximum priority value from the current priority value set, determine a first resource block corresponding to the maximum priority value, and determine one or more second users according to a predefined number of user start-points, wherein each second user corresponds to a single-user path;
a resource pre-allocating unit, adapted to allocate the first resource block to the second user with respect to each single-user path, allocate one or more adjacent resource blocks of the first resource block to the second user according to a ranking position of the priority value of the second user on the one or more adjacent resource blocks; remove all the priority values corresponding to the second user and all the priority values corresponding to the resource blocks allocated to the second user from the priority value set, record corresponding relationships between the user and the resource blocks expressed by the single-user path into a candidate path, determine whether a condition to end allocation is met, trigger the multi-path configuring unit if the condition is met, and trigger a schedule executing unit if the condition is not met; and
the schedule executing unit, adapted to select a path from one or more candidate paths and perform resource scheduling according to the selected path.

It can be seen from the above technical solution that, in the methods and apparatus for resource scheduling in uplink transmission provided by the embodiments of the present invention, multiple candidate paths are provided by using user start-points and/or extension threshold, one path is selected among all candidate paths according to their link capacities, and the resource scheduling is performed according to corresponding relationships between users and resource blocks recorded in the path selected.

## Brief Description of the Drawings

**FIG.1** illustrates a traditional resource scheduling method.
**FIG.2** is a flowchart illustrating a multi-user scheduling by performing adjacent resource block extension on basis of an extension threshold according to an embodiment of the present invention.
**FIG.3** is a flowchart illustrating a multi-user scheduling on basis of different user start-points according to another embodiment of the present invention.
**FIG.4** shows a tree diagram obtained by the scheduling procedure of **FIG.3.**
**FIG.5** is a flowchart of multi-user scheduling according to yet another embodiment of the present invention.

## Detailed Description of the Invention

The present invention will be described in detail hereinafter with reference to accompanying drawings and embodiments to make the technical solution and merits of the present invention clearer.
Embodiments of the present invention provide a method for resource scheduling in uplink transmission. In this method, multiple rounds of allocation operation are adopted for resource allocation, and multiple optional allocation manners are provided in each round of allocation operation. In particular, the method includes:

A1. calculate priority values of all users on all resource blocks and save the priority values into a priority value set. In subsequent procedure of resource allocation, the priority value set will be updated along with the allocation of the resource blocks.
B 1. find a maximum priority value in the current priority value set, determine a first resource block and a first user corresponding to the maximum priority value, and determine one or more single-user paths according to a predefined extension threshold. It should be noted that the allocation of a resource block is determined according to the priority value of the first user on the resource block. The extension threshold makes multiple optional allocation manners available during each cycle of allocation operation. For example, if the extension threshold is 2, a first optional allocation manner is to allocate an adjacent resource block of the first resource block to the first user if the first user has a maximum priority value on the adjacent resource block; and a second optional allocation manner is to allocate the adjacent resource block to the first user if the first user has a second maximum priority value on the adjacent resource block. That is, there are two optional allocation manners when the extension threshold is set as 2. In other words, the extension threshold is used for determining how many optional allocation manners (or extension manners) the first user has on adjacent resource blocks of the first resource block.
C1. with respect to each single-user path, allocate the first resource block to the first user; determine whether the first user has a priority value which meets the requirement of the single-user path on one or more adjacent resource blocks of the first resource block; allocate the adjacent resource block corresponding to the priority value which meets the requirement of the single-user path to the first user;
remove all priority values corresponding to the first user and all priority values corresponding to all resource blocks allocated to the first user from the priority value set;
record a corresponding relationship between resource blocks and a user represented by the single-user path into a corresponding candidate path, and determine whether an allocation end condition is met; if the allocation end condition is not met, return to step B1; otherwise, proceed to step D1.
D1. select a path among one or more candidate paths and schedule resources according to the path selected.

In another method for resource scheduling in uplink transmission provided by embodiments of the present invention, multiple optional allocation manners are determined according to ranking position of a priority value of a user on a first resource block among all priority values. In particular, the method includes:

A2. calculate priority values of all users on all resource blocks and save the priority values in a priority value set.
B2. find a maximum priority value in the current priority value set, determine a first resource block corresponding to the maximum priority value, and determine one or more second users according to a predefined number of user start-points; wherein each second user corresponds to a first single-user path. In other words, the number of user start-points is used to determine to which second user(s) the first resource block may be allocated.
C2. as to each first single-user path, allocate the first resource block to the second user, and allocate one or more adjacent resource blocks of the first resource block to the second user according to a ranking position of the priority value of the second user on the adjacent resource block;
remove all priority values corresponding to the second user and all priority values corresponding to the resource blocks allocated to the second user from the priority value set;
record corresponding relationships between the second user and the resource blocks expressed by the first single-user path into a candidate path, and determine whether an allocation end condition is met; if the allocation end condition is not met, return to step B2; otherwise, proceed to step D2.
D2. select a path from one or more candidate paths and schedule resources according to the path selected.

After determining to allocate the first resource block to the second user, it is also possible to determine which adjacent resource blocks of the first resource block can be allocated to the second user, thereby deriving multiple possible allocation manners for the second user.

In particular, determine one or more second single-user path according to the predefined extension threshold; with respect to each second single-user path, determine whether a priority value of the second user on an adjacent resource block meets the requirement of the second single-user path; if the priority value of the second user on the adjacent resource block meets the requirement of the second single-user path, allocate the adjacent resource block to the second user and record the corresponding relationships between the second user and the resource blocks expressed by the second single-user path into a corresponding first single-user path.

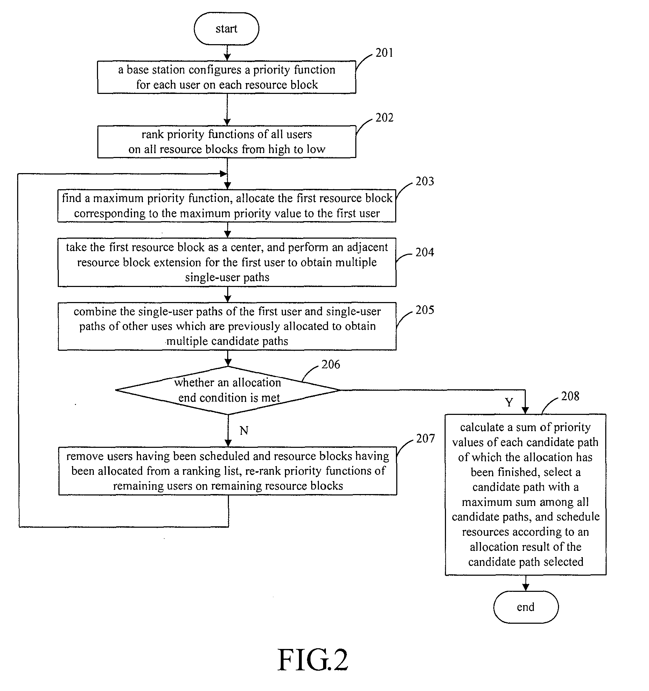

**FIG.2** shows a method for resource scheduling according to an embodiment of the present invention, wherein the method adopts adjacent resource block extension on basis of a threshold for multi-user scheduling.

Step 201: a base station configures a priority function for each user on each resource block.

In particular, the base station measures a Signal Noise Ratio (SNR) of each user and takes the SNR as the priority function of the user. Alternatively, a proportional fair factor may also be used as the priority function.

Step 202: rank priority functions of all users on all resource blocks from high to low.

Step 203: find a maximum priority function according to the ranking result, determine a first resource block and a first user (User A) corresponding to the maximum priority function and allocate the first resource block to the first user.

Step 204: take the first resource block determined in step 203 as a center, and perform an adjacent resource block extension for the first user to obtain multiple single-user paths.

The step is specifically as follows: according to the predefined extension threshold, obtain the multiple single-user paths when performing the extension for the first user, wherein different single-user paths correspond to different resource allocation manners. Suppose the extension threshold is N, then there may be N single-user paths during the allocation of adjacent resource blocks. Each single-user path has a different lowest requirement on the ranking position of the priority function of the first user among all users on the same resource block. For example, as to single-user path 1, only when the priority function of the first user is ranked in the first will an adjacent resource block be allocated to the first user. As to single-user path 2, when the priority function of the first user among all users is not lower than a second maximum value (i.e., ranked in the first or second), an adjacent resource block will be allocated to the first user.

Step 205: combine the single-user paths obtained after the allocation of the first user and single-user paths of other users which are previously allocated to obtain multiple candidate paths.

It should be noted that, in the same candidate path, when allocating resources to the first user, the extension principle (i.e. resource allocation manner) adopted for the first user may be the same as or different from those of other users whose resources allocation has finished. For example, for the other users, only when they have the maximum priority function can they be allocated with a resource block, whereas the first user may be allocated with a resource block either his/her priority function is the maximum or the second maximum.

Further, before the allocation finishes, calculate a sum of current priority values of each candidate path, rank sums of all candidate paths from high to low, reserve one or more candidate paths and delete others according to a ranking result to decrease complexity of resource allocation; or, calculate an average value of current priority values of each candidate path, rank average values of all candidate paths from high to low, reserve one or more candidate paths and delete others according to a ranking result. Obtain a sum of priority values indexed by users and resource blocks having established corresponding relationships on the candidate path, and get an average of the priority values through dividing the sum by the number of resource blocks having been allocated. For example, as to the following candidate path, the average of the priority values is (1.72+1.55+.1.35+1.44)/4=1.515.

| 4 | 4 |  | 3 | 3 |  |
|---|---|---|---|---|---|

Step 206: as to the multiple candidate paths obtained in step 205, determine whether an allocation end condition is met for each of the multiple candidate paths. In particular, it is possible to determine whether all resource blocks have been allocated with respect to each candidate path or determine whether each user has been allocated with a resource block. If the allocation end condition is met, determine that allocation operation for this candidate path during the scheduling cycle is finished and proceed to step 208; otherwise, proceed to step 207.

Step 207: remove users having been scheduled and resource blocks having been allocated from the ranking list, re-rank priority functions of remaining users on remaining resource blocks and return to step 203 to start a new round of allocation operation of single-user paths.

Suppose there are N single-user paths when allocating resources to another user (e.g. a second user or User B), wherein resources of N-1 single-user paths have been occupied after the allocation of the second user, i.e., each of the N-1 single-user paths forms a complete candidate path. It is supposed that resources on the Nth single-user path have not been completely occupied after the allocation of the second user, N single-user paths for the first user are derived during subsequent allocation of the first user and all resource blocks are occupied after the allocation of the first user. In this case, there are totally 2N-1 (i.e. N-1+N) candidate paths.

Step 208: calculate a sum of priority values of each of the candidate paths, and select a candidate path with a maximum sum among all the candidate paths, and schedule resources according to the allocation result of the candidate path selected.

In practical applications, there are many ways to select a candidate path from the multiple candidate paths, and it is also possible to flexibly configure the way according to practical requirements. One possible way is to calculate a total throughput of all RBs having been allocated in the candidate path; and reserve, according to the throughputs calculated, one or more paths with relatively high throughputs. The other is to calculate an average throughput of all RBs having been allocated in multiple candidate paths and reserve one or more paths whose throughputs are larger than the average throughput.

Furthermore, in step 204 of **FIG.2,** a left extension threshold and a right extension threshold may be configured taking the first resource block as a center, i.e. the extension degree may be different for the left and the right. For example, when extending from the first resource block to the left (i.e. to the low frequency direction), there may be two manners: maximum allocation and second maximum allocation, whereas when extending from the first resource block to the right (i.e. to the high frequency direction), only the maximum allocation is applicable.

Further, before entering a new round of single-user allocation in step 207, it is possible to adjust the extension threshold. For example, in the first round and with respect to user 4, the extension threshold is 2; while in the second round and with respect to user 2, the extension threshold is 3.

An example is given hereinafter to describe **FIG.2** in detail. Suppose the number of users N is 4, the number of RBs M is 6, and priority values of all users on all resource blocks are shown by matrix C.

$$C_{N\times M}=\begin{bmatrix} 1 & 1.25 & 1.33 & 0.59 & 0.97 & 1.09 \\ 0.09 & 0.12 & 0.11 & 0.51 & 0.45 & 0.32 \\ 0.75 & 1.19 & 1.07 & 1.35 & 1.44 & 0.81 \\ 1.72 & 1.55 & 0.7 & 0.63 & 1.20 & 1.08 \end{bmatrix}_{N\times M}$$

1. Rank all the priority values and determine that the maximum priority value is 1.72 which is the priority value of user 4 on resource block 1. Therefore, allocate resource block 1 to user 4.
2. Determine which adjacent resource blocks of resource block 1 can be allocated to user 4. Different from a traditional method, an extension threshold is configured for performing RB extension in this embodiment of the present invention. In case that there are 4 users, a maximum value of the extension threshold is 4, i.e. there are at most 4 single-user paths with respect to the allocation of each user.

Therefore, as to user 4, there are the following 4 candidate paths when performing adjacent RB extension taking RB1 as a center.

Candidate path 1: extend by the maximum priority value, and an allocation result which is the same as that of the traditional method will be obtained:

| RB1 | RB2 | RB3 | RB4 | RB5 | RB6 |
|---|---|---|---|---|---|
| User 4 | User 4 | User 1 | User 3 | User 3 | User 2 |

According to capacity matrix C, it is known that a total capacity corresponding to this allocation result is 1.72+1.55+1.33+1.35+1.44+0.32=7.71.

Candidate path 2: extend by the second maximum priority value, and both RB1 and RB4 are allocated to user 4. Furthermore, the same resource allocation manner may be adopted to allocate RBs for remaining users (i.e. other users except user 4). In particular, after the allocation of user 4, matrix C is equivalent as follows:

$$C_{N\times M}=\begin{bmatrix} 1 & 1.25 & 1.33 & 0.59 & 0.97 & 1.09 \\ 0.09 & 0.12 & 0.11 & 0.51 & 0.45 & 0.32 \\ 0.75 & 1.19 & 1.07 & 1.35 & 1.44 & 0.81 \\ 1.72 & 1.55 & 0.7 & 0.63 & 1.20 & 1.08 \end{bmatrix}_{N\times M}$$

The priority values ruled out by dashed lines will not participate in subsequent path allocations, i.e. they are removed from the matrix. During practical applications, the priority values erased by dashed lines may be changed to small negative numbers.

Thus, these priority values will not be found in the allocation, which has the same effect as removing the priority values from a priority value set.

Thereafter, find a user who has a maximum priority value and its corresponding RB among remaining users and RBs, and perform adjacent RB extension using the same second maximum priority value principle. At this time, user 3 has a maximum priority value on RB5. And according to the second maximum priority value principle, RB6, RB5, RB4 and RB3 should be allocated to user 3. Therefore, the final allocation result is as follows:

| RB1 | RB2 | RB3 | RB4 | RB5 | RB6 |
|---|---|---|---|---|---|
| User 4 | User 4 | User 3 | User 3 | User 3 | User 3 |

The total capacity is 1.72+1.55+1.07+1.35+1.44+0.81=7.94.

Candidate path 3: extend by the third maximum priority value. That is to say, rank the priority values of all users on an adjacent resource block. If the priority value of user 4 is ranked in the third or above, i.e. user 4 has at least the third maximum priority value, the adjacent resource block will be allocated to user 4. According to the above principle, RB1 to RB6 will all be allocated to user 4. The allocation result is as follows:

| RB1 | RB2 | RB3 | RB4 | RB5 | RB6 |
|---|---|---|---|---|---|
| User 4 | User 4 | User 4 | User 4 | User 4 | User 4 |

The total capacity is 1.72+1.55+0.7+0.63+1.2+1.08=6.88.

Candidate path 4: extend by the fourth maximum priority value. Thus all RB1 to RB6 will be allocated to user 4. The allocation result is as follows:

| RB1 | RB2 | RB3 | RB4 | RB5 | RB6 |
|---|---|---|---|---|---|
| User 4 | User 4 | User 4 | User 4 | User 4 | User 4 |

The total capacity is 1.72+1.55+0.7+0.63+1.2+1.08=6.88.

3. Select a path with a maximum capacity from the above four candidate paths. It can be seen that the allocation result according to candidate path 2 has the maximum capacity.

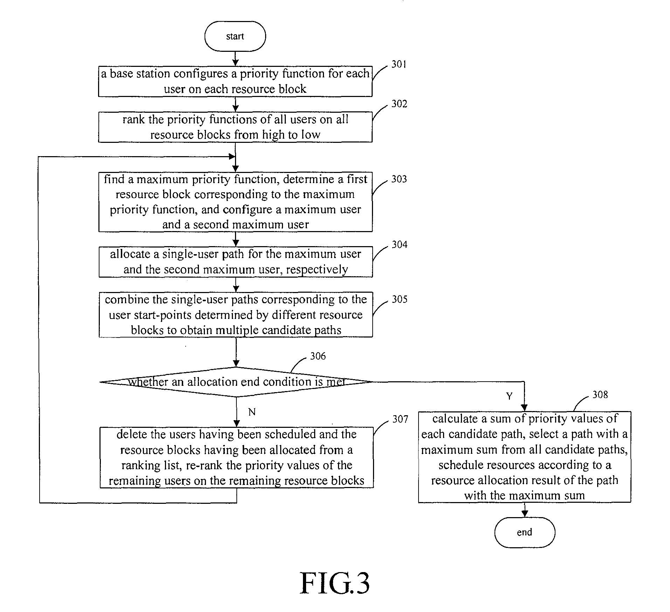

**FIG.3** shows a method for resource scheduling according to another embodiment of the present invention. In this embodiment, multi-user scheduling is performed based on start-points corresponding to users and resource blocks.

Step 301: a base station configures a priority function for each user on each resource block. In particular, an SNR may be used as the priority function of each user.

Step 302: rank the priority functions of all users on all resource blocks in a descending order.

Step 303: find a maximum priority function among all the priority functions according to the ranking result, determine a first resource block corresponding to the maximum priority function and determine one or more user start-points according to a predefined number of user start-points.

In this embodiment, the number of user start-points is configured as 2, i.e., there may be two user start-points: a maximum user and a second maximum user. Take user A corresponding to the maximum priority function as the maximum user and find user B who has a second maximum priority function on the first resource block corresponding to the maximum priority function. Take user B as the second maximum user.

It can be seen that the two user start-points, i.e. the maximum user and the second maximum user, are both found through the first resource block, i.e. they are user start-points determined by the same resource block.

Step 304: allocate a single-user path for the maximum user and a single-user path for the second maximum user, respectively.

Specifically, as to the single-user path of the maximum user, allocate the first resource block to the maximum user, and perform adjacent resource block extension for the maximum user taking the first resource block as a center, wherein the adjacent extension may follow the traditional manner. If the maximum user has a maximum priority function on an adjacent resource block, allocate the adjacent resource block to the maximum user; otherwise, the resource allocation to the maximum user is finished.

As to the single-user path of the second maximum user, the resource allocation manner is similar to that of the maximum user and will not be repeated herein. It should be noted that, the procedures for determining the single-user paths respectively for the maximum user and the second maximum user are independent from each other.

In practical applications, considering restrictions of power and bandwidth, it is necessary to configure a maximum number of resource blocks allowed to be allocated to a user. During the adjacent resource blocks extension, it may be further determined whether the number of RBs already allocated to the user reaches or exceeds the maximum number of RBs allowed to be allocated to the user. If the number of RBs already allocated to the user reaches the maximum number of RBs allowed to be allocated to the user, do not allocate a resource block to the user any more even if the priority value of the user on the RB meets the requirement of the threshold.

Step 305: combine the single-user paths corresponding to the user start-points determined by different resource blocks to obtain multiple candidate paths.

Step 306: with respect to each candidate path, determine whether an allocation end condition is met, e.g. determine whether all resource blocks have been allocated or determine whether all users have been allocated with a resource block, etc. If all resource blocks have been allocated, operations during this scheduling cycle are finished and proceed to step 308; otherwise, proceed to step 307.

As to a candidate path whose allocation is finished, there may still be a resource block not allocated. At this time, it is possible to allocate the remaining resource block to a user who occupies an adjacent resource block of the remaining RB. If the left adjacent resource block and the right adjacent resource block are occupied by different users, one possible method is to compare priority values of the two users on the two adjacent resource blocks and allocate the remaining resource block to the user with the larger priority value.

Step 307: delete the users having been scheduled and the resource blocks having been allocated from a ranking list, re-rank the priority values of the remaining users on the remaining resource blocks, and return to step 303 to start a new cycle of single-user path allocation.

Step 308: calculate a sum of priority values of each of the candidate paths, select a path with a maximum sum from all the candidate paths, schedule resources according to the allocation result of the path with the maximum sum and end the procedure.

Furthermore, before the new cycle of single-user path allocation in step 307, it is possible to adjust the number of user start-points. For example, the number of user start-points in the first cycle is 2 and the number of user start-points in the second cycle is adjusted to 3.

An example is given hereinafter to describe the above procedure of **FIG.3** in detail.

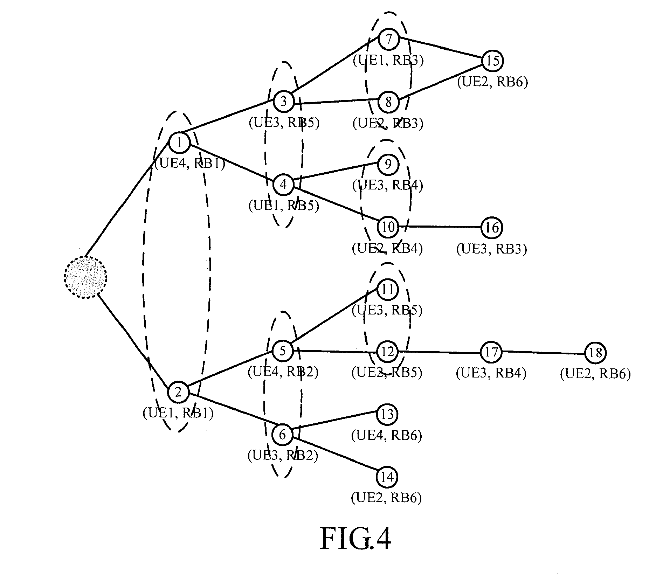

Suppose the number of users is 4, the number of resource blocks is 6 and matrix C includes priority values of each user on each resource block. **FIG.4** shows a tree diagram obtained by the scheduling procedure of **FIG.3.**

$$C_{N\times M}=\begin{bmatrix} 1 & 1.25 & 1.33 & 0.59 & 0.97 & 1.09 \\ 0.09 & 0.12 & 0.11 & 0.51 & 0.45 & 0.32 \\ 0.75 & 1.19 & 1.07 & 1.35 & 1.44 & 0.81 \\ 1.72 & 1.55 & 0.7 & 0.63 & 1.20 & 1.08 \end{bmatrix}_{N\times M}$$

In **FIG.4,** a pair of start-points found by a same resource block is circled with dashed lines. For example, both start-points 3 and 4 are found by RB5, thus they form a start-point pair. It can be seen that:

1. Start-point 1 (UE4, RB1) corresponds to a maximum priority value 1.72. The single-user path configured for user 4 at start-point 1 represents that resource blocks 1 and 2 are assigned to user 4, simply expressed as:

| 4 | 4 | | | | |
|---|---|---|---|---|---|

2. A downstream node of start-point 1 is start-point 3 (UE3, RB5). The method for determining start-point 3 is as follows: remove the first and second columns and the fourth row from matrix C, find the maximum priority value 1.44 from the remaining priority values. The maximum priority value 1.44 corresponds to start-point 3 (UE3, RB5). The single-user path configured at start-point 3 for user 3 is to occupy resource blocks 4 and 5. The step of combining the single-user paths corresponding to the start-points determined by different resource blocks in step 305 is specifically as follows: combine the single-user path of start-point 3 with the single-user path of its upstream start-point 1. The obtained candidate path is as follows:

| 4 | 4 | | 3 | 3 | |
|---|---|---|---|---|---|

Since the candidate path still has resource blocks not allocated, it is necessary to find downstream node of start-point 3. It can be seen from **FIG.4** that, the downstream node of start-point 3 is start-point 7. The candidate path may change as follows by combing the single-path of start-point 7:

| 4 | 4 | 1 | 3 | 3 | |
|---|---|---|---|---|---|

Furthermore, the downstream node of start-point 7 is start-point 15. The following candidate path may be obtained by combing the single-path of start-point 15.

| 4 | 4 | 1 | 3 | 3 | 2 |
|---|---|---|---|---|---|

Now, all resource blocks are allocated in the candidate path. Therefore, the allocation of this candidate path is finished.

3. Start-point 2 (UE1, RB1) is in a same level as start-point 1. Similar as start-point 1, start-point 2 (UE1, RB1) is also found by resource block 1. The single-user path configured for user 1 at start-point 2 is to occupy resource block 1, simply expressed as:

| 1 | | | | | |
|---|---|---|---|---|---|

One downstream node of start-point 2 is start-point 5. The candidate path obtained after allocation is:

| 1 | 4 | | | | |
|---|---|---|---|---|---|

Furthermore, the downstream node of start-point 5 is start-point 11. The candidate path obtained after allocation is:

| 1 | 4 | 3 | 3 | 3 | 3 |
|---|---|---|---|---|---|

It can be seen that, all resource blocks in the candidate path are allocated.
Therefore, the allocation of this candidate path is finished.
4. Another downstream node of start-point 2 is start-point 6. The candidate path obtained after allocation is:

| 1 | 4 | 3 | 3 | 3 | |
|---|---|---|---|---|---|

Further, one downstream node of start-point 6 is start-point 13, the candidate path obtained after allocation is:

| 1 | 3 | 3 | 3 | 3 | 4 |
|---|---|---|---|---|---|

Another downstream node of start-point 6 is start-point 14. The candidate path obtained after allocation is:

| 1 | 3 | 3 | 3 | 3 | 2 |
|---|---|---|---|---|---|

The above is the procedure of determining multiple candidate paths using the maximum user and the second maximum user as two branches. In practical applications, it is possible to configure the number of user start-points to control the number of branches. For example, if the number of user start-points is configured as 3, then three branches, i.e. the maximum user, second maximum user and the third maximum user, may be used for determining the candidate paths. The detailed process is not repeated herein.

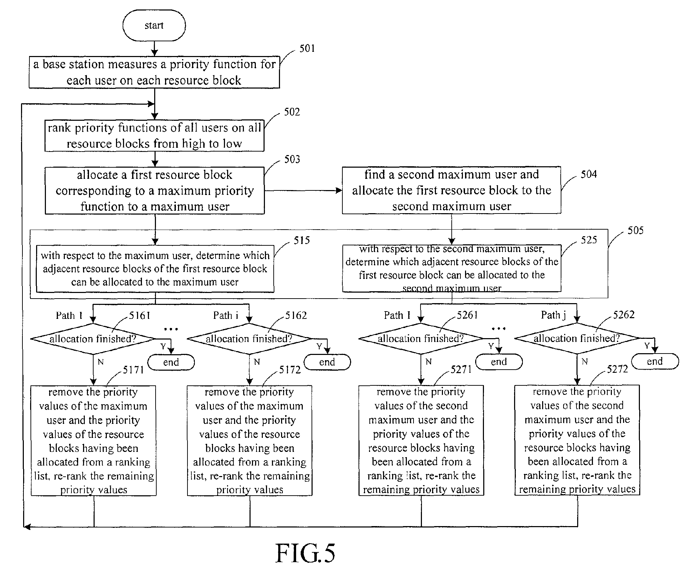

**FIG.5** is a flowchart illustrating a multi-user scheduling according to an embodiment of the present invention. In this embodiment, the start-point extension shown in **FIG.3** is combined with the threshold-based adjacent resource block extension shown in **FIG.2** to obtain more candidate paths.

Step 501: a base station configures a priority function for each user on each resource block.

Step 502: rank priority functions of all users on all resource blocks from high to low.

Step 503: according to a ranking result, allocate a first resource block corresponding to a maximum priority function to a corresponding user. The user is called as a maximum user since he has the maximum priority function.

Step 504: find a user who has a second maximum priority function among all users on the first resource block, take the user as a second maximum user and allocate the first resource block to the second maximum user.

Step 505: take the first resource block as a center, respectively perform a threshold-based adjacent resource block extension to a first single-user path of the maximum user and that of the second maximum user. As to each of the first single-user paths, multiple second single-user paths may be obtained during allocation of adjacent resource blocks according to the predefined extension threshold. Different second single-user paths correspond to different resource allocation manners. The method of adjacent resource block allocation on basis of an extension threshold is shown as **FIG.2** and will not be repeated herein.

A first single-user path refers to corresponding relationships between a user and resource blocks allocated to the user. A second single-user path refers to corresponding relationships between a user and adjacent resource blocks allocated to the user.

In **FIG.5,** step 515 corresponds to the first single-user path of the maximum user and step 525 corresponds to the first single-user path of the second maximum user. The first single-user path in step 505 further has i possibilities respectively correspond to second single-user paths having different lowest ranking requirements.

Step 506: record the first single-user path containing a second single-user path into a corresponding candidate path to form one or more candidate paths. Then, determine whether an allocation end condition is met (e.g. whether all resource blocks have been allocated) by each of the above-mentioned multiple candidate paths. If the allocation end condition is met, operations during this scheduling cycle for the candidate path are finished; otherwise, proceed to step 507.

In step 5162, the maximum user is extended to an adjacent resource block on which the priority value is ranked in the ith, i.e. the priority value of the maximum user is ranked in the ith or above on the adjacent resource block; in step 5161, the maximum user is extended to an adjacent resource block on which the priority value is ranked in the first. Steps 5261 and 5262 are similar as above and will not be repeated herein.

Step 507: remove the users having been scheduled and the resource blocks having been allocated from a ranking list, re-rank the priority functions of remaining users on remaining resource blocks and return to step 503.

An example is given to describe **FIG.5** in detail. Suppose the number of users is 4, the number of resource blocks is 6, and priority values of each user on each resource block is as shown by matrix C.

$$C_{N\times M}=\begin{bmatrix} 1 & 1.25 & 1.33 & 0.59 & 0.97 & 1.09 \\ 0.09 & 0.12 & 0.11 & 0.51 & 0.45 & 0.32 \\ 0.75 & 1.19 & 1.07 & 1.35 & 1.44 & 0.81 \\ 1.72 & 1.55 & 0.7 & 0.63 & 1.20 & 1.08 \end{bmatrix}_{N\times M}$$

1. Determine a user and a resource block which correspond to the maximum priority value 1.72, (UE4, RB1) in this embodiment. Find a second maximum user, i.e. user 1, on RB1. The two paths obtained by this step are respectively path 1 and path 2.

Path 1 is simply expressed as:

| 4 | | | | | |
|---|---|---|---|---|---|

Path 2 is simply expressed as:

| 1 | | | | | |
|---|---|---|---|---|---|

2. Perform an adjacent RB extension to user 4 in path 1 and user 1 in path 2, respectively. Suppose the extension threshold is 2, two different paths may be obtained with respect to each of paths 1 and 2.

For example, as to path 1, a following path a may be obtained by performing extension according to the maximum priority value:

| 4 | 4 | | | | |
|---|---|---|---|---|---|

As to path 1, a following path b may be obtained by extending according to the second maximum priority value:

| 4 | 4 | | | | |
|---|---|---|---|---|---|

Similarly, as to path 2, a following path c may be obtained by extending according to the maximum priority value:

| 1 | | | | | |
|---|---|---|---|---|---|

As to path 2, a following path d may be obtained by extending according to the second maximum priority value:

| 1 | 1 | 1 | | | |
|---|---|---|---|---|---|

3. As to the four paths a, b, c and d, delete users having been scheduled and RBs which have been allocated, and find a user who has a maximum priority value among remaining users on remaining RBs and a second maximum user on the RB corresponding to the maximum priority value.

As to path a, two paths may be further obtained: path R1 and path R2. Obtain R1 according to the maximum priority value, i.e. add a corresponding relationship (UE1, RB5) in the candidate path.

| 4 | 4 | | | 3 | |
|---|---|---|---|---|---|

Obtain R2 according to the second maximum priority value, i.e. add a corresponding relationship (UE1, RB5) in the candidate path.

| 4 | 4 | | | 1 | |
|---|---|---|---|---|---|

4. Perform an adjacent RB extension to user 3 in path R1 and user 1 in path R2, respectively. If the extension threshold is 2, an extension result of path R1 according to the maximum priority value is path a1:

| 4 | 4 |  | 3 | 3 |  |
|---|---|---|---|---|---|

An extension result of path R1 according to the second maximum priority value is path a2:

| 4 | 4 | 3 | 3 | 3 | 3 |
|---|---|---|---|---|---|

Similarly, an extension result of path R2 according to the maximum priority value is path a3:

| 4 | 4 |  |  | 1 | 1 |
|---|---|---|---|---|---|

An extension result of path R2 according to the second maximum priority value is path a4:

| 4 | 4 | 1 | 1 | 1 | 1 |
|---|---|---|---|---|---|

It can be known from the above that, the allocation of paths a2 and a4 are finished, and paths a1 and a3 require further allocation.

5. Proceed with the allocation of paths a1 and a3. Find a user who has a maximum priority value on paths a1 and a3 among remaining users and remaining RBs.

As to path a1, the maximum user is user 1:

The second maximum user is user 2:

| 4 | 4 | 1 | 3 | 3 |  |
|---|---|---|---|---|---|

| 4 | 4 | 2 | 3 | 3 |  |
|---|---|---|---|---|---|

It can be seen that, the adjacent RB extension cannot be performed to either user 1 or user 2. Therefore, allocations of user 1 and user 2 are finished.

6. Allocate the last RB on the above two paths. It can be seen that, the last RB can be allocated only to user 2 and user 1. The following is obtained:

| 4 | 4 | 1 | 3 | 3 | 2 |
|---|---|---|---|---|---|

and

| 4 | 4 | 2 | 3 | 3 | 1 |
|---|---|---|---|---|---|

Through the above procedure, an allocation result of path a is obtained.

7. As to paths b, c and d, allocation results may be obtained in a similar way.

The allocation result corresponding to path b is the same as that of path a, as shown in the following:

The allocation result corresponding to path c is:

| 4 | 4 | 1 | 3 | 3 | 2 |
|---|---|---|---|---|---|

(continued)

| | | | | | |
|---|---|---|---|---|---|
| 4 | 4 | 3 | 3 | 3 | 3 |
| 4 | 4 | 2 | 3 | 3 | 1 |
| 4 | 4 | 1 | 1 | 1 | 1 |

| | | | | | |
|---|---|---|---|---|---|
| 1 | 4 | 3 | 3 | 3 | 2 |
| 1 | 2 | 3 | 3 | 3 | 4 |
| 1 | 4 | 3 | 3 | 3 | 3 |
| 1 | 2 | 3 | 3 | 3 | 3 |
| 1 | 2 | 2 | 2 | 4 | 4 |
| 1 | 3 | 3 | 2 | 4 | 4 |
| 1 | 3 | 3 | 3 | 4 | 4 |

| | | | | | |
|---|---|---|---|---|---|
| 1 | 4 | 4 | 4 | 4 | 4 |

The allocation result corresponding to path d is:

| | | | | | |
|---|---|---|---|---|---|
| 1 | 1 | 1 | 3 | 3 | 4 |
| 1 | 1 | 1 | 3 | 3 | 2 |
| 1 | 1 | 1 | 3 | 3 | 3 |
| 1 | 1 | 1 | 3 | 4 | 4 |
| 1 | 1 | 1 | 2 | 4 | 4 |
| 1 | 1 | 1 | 4 | 4 | 4 |

8. Find a path which has a maximum throughput or a throughput larger than an average throughput from the above candidate paths.

It can be seen from the above detailed description that, the embodiment shown in **FIG.5** is similar to the scheduling method on basis of start-points with corresponding users and resource blocks shown in **FIG.3** The difference relies in that, as to the predefined threshold N, N second single-user paths may be extended from a node shown in **FIG. 4** with respect to different maximum and second maximum users. Therefore, more candidate paths will be obtained finally in **FIG.5,** and it is more likely to obtain an optimal path, which may increase spectrum efficiency of the SC-FDMA system.

In addition, embodiments of the present invention also provide a resource scheduling apparatus applied on a base station. The apparatus includes:

a priority value calculating unit, adapted to calculate priority values of all users on all resource blocks and save the priority values in a priority value set;

a multi-path configuring unit, adapted to find a maximum priority value from the current priority value set, determine a first resource block and a first user corresponding to the maximum priority value, and determine one or more single-user paths according to a predefined extension threshold;

a resource pre-allocating unit, adapted to allocate, with respect to each single-user path, the first resource block to the first user, determine whether the first user has a priority value which meets a requirement of the single-user path on one or more adjacent resource blocks of the first resource block, allocate the adjacent resource blocks corresponding to the priority values meeting the requirement the single-user path to the first user; remove all priority values corresponding to the first user and all priority values corresponding to the resource blocks having been allocated to the first user from the priority value set, record corresponding relationships between the resource blocks and the user represented by the single-user path into a candidate path, and determine whether an allocation end condition is met for the candidate path, trigger the multi-path configuring unit if the allocation end condition is not met and trigger a schedule executing unit if the allocation end condition is met for each candidate path; and
the schedule executing unit, adapted to select a path from one or more candidate paths and perform resource scheduling according to the selected path.

Furthermore, after the resource allocating unit triggers the multi-path configuring unit, the multi-path configuring unit finds a maximum priority value from an updated priority value set and performs a new round of allocation operation. At this time, the priority value set does not include the priority values corresponding to the first user and the priority values corresponding to the resource blocks allocated to the first user.

In addition, embodiments of the present invention provide another resource scheduling apparatus for uplink transmission. The apparatus includes:

a priority value calculating unit, adapted to calculate priority values of all users on all resource blocks and save the priority values in a priority value set;
a multi-path configuring unit, adapted to find a maximum priority value from the current priority value set, determine a first resource block corresponding to the maximum priority value, and determine one or more second users according to a predefined number of user start-points, wherein each second user corresponds to a first single-user path;
a resource pre-allocating unit, adapted to allocate the first resource block to the second user with respect to each first single-user path, allocate one or more adjacent resource blocks of the first resource block to the second user according to a ranking position of the priority value of the second user on the one or more adjacent resource blocks; remove all priority values corresponding to the second user and all priority values corresponding to the resource blocks allocated to the second user from the priority value set, record corresponding relationships between the resource blocks and the second user represented by the first single-user path into a candidate path, determine whether an allocation end condition is met, trigger the multi-path configuring unit if the allocation end condition is not met, and trigger a schedule executing unit if the allocation end condition is met for each candidate path; and
the schedule executing unit, adapted to determine a path from one or more candidate paths and perform resource scheduling according to the determined path.

The foregoing descriptions are only preferred embodiments of this invention and are not for use in limiting the protection scope thereof. Any changes and modifications can be made by those skilled in the art without departing from the spirit of this invention and therefore should be covered within the protection scope as set by the appended claims.

## Claims

**1.** A resource scheduling method for uplink transmission, comprising:

A1. calculating priority values of all users on all resource blocks and saving the priority values into a priority value set;
B1. finding a maximum priority value from the current priority value set, determining a first resource block and a first user corresponding to the maximum priority value, and determining one or more single-user paths according to a predefined extension threshold;
C1. with respect to each single-user path, allocating the first resource block to the first user, determining whether the first user has a priority value which meets a requirement of the single-user path on one or more adjacent resource blocks of the first resource block, and allocating the adjacent resource block corresponding to the priority value meeting the requirement of the single-user path to the first user;
removing all priority values corresponding to the first user and all priority values corresponding to the resource blocks allocated to the first user from the priority value set;
recording a corresponding relationship between users and resource blocks represented by the single-user path into a candidate path, determining whether a condition to end allocation is met; if the condition is not met, returning to step B1; otherwise, proceeding to step D1; and
D1. selecting a path from one or more candidate paths and performing resource scheduling according to the path selected.

**2.** The method of claim 1, further comprising:

configuring or updating the extension threshold before performing step B1.

3. The method of claim 2, wherein configuring or updating the extension threshold comprises: configuring the extension threshold as not larger than the number of users, or modifying the extension threshold having been configured, wherein the extension threshold is a lowest ranking requirement for the priority value of the first user on one of the adjacent resource blocks among all priority values on the adjacent resource block.

4. The method of claim 3, wherein determining one or more single-user paths according to the extension threshold comprises: selecting, from 1 to the extension threshold, a value for each single-user path as the lowest ranking requirement; and
determining whether the first user has a priority value which meets the requirement of the single-user path on one or more adjacent resource blocks of the first resource block in step C1 comprises: with respect to each adjacent resource block, ranking priority values of all users on the adjacent resource block in a descending order, if the ranking position of the priority value of the first user on the adjacent resource block meets the lowest ranking requirement of the single-user path, determining that the first user has the priority value meeting the requirement of the single-user path.

5. The method of claim 3, wherein the extension threshold comprises a left extension threshold and a right extension threshold; and
wherein determining one or more single-user paths according to the extension threshold comprises: when extending to the left taking the first resource block as a center, selecting, from 1 to the left extension threshold, a value as a left lowest ranking requirement for each single-user path; when extending to the right taking the first resource block as the center, selecting, from 1 to the right extension threshold, a value as a right lowest ranking requirement for each single-user path;
wherein determining whether the first user has a priority value which meets the requirement of the single-user path on one or more adjacent resource blocks of the first resource block in step C1 comprises:

with respect to each left adjacent resource block, ranking priority values of all users on the left adjacent resource block, if a ranking position of the priority value of the first user on the left adjacent resource block meets the left lowest ranking requirement selected for the single-user path, determining that the first user has the priority value meeting the requirement of the single-user path;
with respect to each right adjacent resource block, ranking priority values of all users on the right adjacent resource block, if a ranking position of the priority value of the first user on the right adjacent resource block meets the right lowest ranking requirement selected for the single-user path, determining that the first user has the priority value meeting the requirement of the single-user path.

6. The method of anyone of claims 1 to 5, further comprising:

before allocating the adjacent resource block corresponding to the priority value meeting the requirement of the single-user path to the first user in step C1, determining whether the number of resource blocks allocated to the first user exceeds a maximum number of resource blocks allowed to be allocated to the first user; if exceeds, not allocating the adjacent resource block to the first user.

7. The method of anyone of claims 1 to 5, wherein the condition to end allocation comprises: all resource blocks are allocated or all users are allocated with at least one resource block.

8. The method of anyone of claims 1 to 5, further comprising:

before returning to step B1 in step C1, calculating a sum of priority values of each candidate path, ranking sums of all candidate paths from high to low, reserving one or more candidate paths according to a ranking result and deleting other candidate paths; and
selecting one path from one or more candidate paths and performing resource scheduling according to the selected path in step D1 comprises: calculating a sum of priority values of each candidate path, performing the resource scheduling according to corresponding relationships between users and resource blocks configured in the candidate path corresponding to the maximum sum.

9. The method of anyone of claims 1 to 5, further comprising:

before returning to step B1 in step C1, calculating an average priority value of each candidate path, ranking average priority values of all candidate paths from high to low, reserving one or more candidate paths according to a ranking result and deleting other candidate paths; and
selecting a path from one or more candidate paths and performing resource scheduling according to the path selected in step D1 comprises: calculating a sum of priority values of each candidate path, selecting a path with a maximum sum, and performing the resource scheduling according to corresponding relationships between users and resource blocks configured in the path selected.

**10.** The method of anyone of claims 1 to 5, wherein finding the maximum priority value from the current priority value set in step B1 comprises: ranking all priority values currently included in the priority value set, obtaining the maximum priority value according to a ranking result;
wherein the priority value set is a matrix taking one of users and resource blocks as rows and the other as columns and the priority values as elements.

**11.** A resource scheduling method for uplink transmission, comprising:

A2. calculating priority values of all users on all resource blocks and saving the priority values in a priority value set;
B2. find a maximum priority value from the current priority value set, determining a first resource block corresponding to the maximum priority value, and determining one or more second users according to a predefined number of user start-points,
wherein each second user corresponds to a first single-user path;
C2. with respect to each first single-user path, allocating the first resource block to the second user, and allocating one or more adjacent resource blocks of the first resource block to the second user according to a ranking position of the priority value of the second user on the one or more adjacent resource blocks;
removing all priority values corresponding to the second user and all priority values corresponding to the resource blocks allocated to the second user from the priority value set;
recording corresponding relationships between the users and the resource blocks expressed by the first single-user path into a candidate path, determining whether a condition to end allocation is met, if the condition is not met, returning to step B2; otherwise, proceeding to step D2; and
D2. determining a path from one or more candidate paths, and performing resource scheduling according to the path determined.

**12.** The method of claim 11, further comprising: configuring or updating the number of user start-points before performing step B2.

**13.** The method of claim 12, wherein determining one or more second users according to the number of user start-points comprises:

determining users whose priority values are ranked in the Nth or above on the first resource block among all the priority values as the second users, wherein N equals to the number of user start-points.

**14.** The method of claim 12, wherein allocating one or more adjacent resource blocks of the first resource block to the second user according to a ranking position of the priority value of the second user on the one or more adjacent resource blocks comprises:

with respect to each adjacent resource block, ranking the priority values of all users on the adjacent resource block, if the priority value of the second user is maximum on the adjacent resource block, allocating the adjacent resource block to the second user.

**15.** The method of claim 12, wherein allocating one or more adjacent resource blocks of the first resource block to the second user according to a ranking position of the priority value of the second user on the one or more adjacent resource blocks comprises:

with respect to each adjacent resource block, determining one or more second single-user paths according to a predefined extension threshold;
with respect to each second single-user path, determining whether the second user has a priority value which meets a requirement of the second single-user path on the adjacent resource block, if the second user has the priority value which meets the requirement of the second single-user path on the adjacent resource block, allocating the adjacent resource block to the second user, and recording corresponding relationships between the user and the resource blocks expressed by the second single-user path into a corresponding first single-user path.

**16.** The method of anyone of claims 11 to 15, further comprising: before returning to step B2 in step C2, calculating a sum of priority values of each candidate path, ranking sums of all candidate paths from high to low, reserving one or more candidate paths according to a ranking result and deleting other candidate paths; and
determining a path from the one or more candidate paths and performing resource scheduling according to the path determined in step D2 comprises: calculating a sum of priority values of each candidate path, performing the resource scheduling according to the corresponding relationships between users and resource blocks recorded in the candidate path with the maximum sum of priority values.

**17.** The method of anyone of claims 11 to 15, further comprising: before returning to step B2 in step C2, calculating an average priority value of each candidate path, ranking average priority values of all candidate paths from high to low, reserving one or more candidate paths according to a ranking result and deleting other candidate paths; and
determining a path from one or more candidate paths and performing resource scheduling according to the path determined in step D2 comprises: calculating a sum of priority values of each candidate path, selecting a candidate path with the maximum sum, and performing the resource scheduling according to the corresponding relationships between users and resource blocks recorded in the candidate path selected.

**18.** A resource scheduling apparatus for uplink transmission, comprising:

a priority value calculating unit, adapted to calculate priority values of all users on all resource blocks, and save the priority values in a priority value set;
a multi-path configuring unit, adapted to find a maximum priority value from the current priority value set, determine a first resource block and a first user corresponding to the maximum priority value, and determine one or more single-user paths according to a predefined extension threshold;
a resource pre-allocating unit, adapted to allocate, with respect to each single-user path, the first resource block to the first user, determine whether the first user has a priority value which meets a requirement of the single-user path on one or more adjacent resource blocks of the first resource block, allocate the adjacent resource blocks corresponding to the priority values meeting the requirement of the single-user path to the first user; remove all the priority values corresponding to the first user and all the priority values corresponding to the resource blocks allocated to the first user from the priority value set, record corresponding relationships between the user and the resource blocks expressed by the single-user path into a candidate path, and determine whether a condition to end allocation is met, trigger the multi-path configuring unit if the condition is met and trigger a schedule executing unit if the condition is not met; and
the schedule executing unit, adapted to determine a path from one or more candidate paths and perform resource scheduling according to the determined path.

**19.** A resource scheduling apparatus for uplink transmission, comprising:

a priority value calculating unit, adapted to calculate priority values of all users on all resource blocks and save the priority values in a priority value set;
a multi-path configuring unit, adapted to find a maximum priority value from the current priority value set, determine a first resource block corresponding to the maximum priority value, and determine one or more second users according to a predefined number of user start-points, wherein each second user corresponds to a single-user path;
a resource pre-allocating unit, adapted to allocate the first resource block to the second user with respect to each single-user path, allocate one or more adjacent resource blocks of the first resource block to the second user according to a ranking position of the priority value of the second user on the one or more adjacent resource blocks; remove all the priority values corresponding to the second user and all the priority values corresponding to the resource blocks allocated to the second user from the priority value set, record corresponding relationships between the user and the resource blocks expressed by the single-user path into a candidate path, determine whether a condition to end allocation is met, trigger the multi-path configuring unit if the condition is met, and trigger a schedule executing unit if the condition is not met; and
the schedule executing unit, adapted to select a path from one or more candidate paths and perform resource scheduling according to the selected path.

start
find a maximum priority value through ranking all priority values and allocate the resource block corresponding to the maximum priority value to a corresponding user
101
according to the adjacent resource block extension principle, select a resource block adjacent to the resource block corresponding to the maximum priority value and allocate the selected resource block to user 4
102
start new allocation among remaining users 1, 2 and 3 and remaining resource blocks 3, 4, 5 and 6
103
start new allocation among remaining users 1 and 2 and remaining resource blocks 3 and 6
104
allocate resource block 6 to user 2, and the resource scheduling is finished
105

FIG.1

start
201
a base station configures a priority function for each user on each resource block
202
rank priority functions of all users on all resource blocks from high to low
203
find a maximum priority function, allocate the first resource block corresponding to the maximum priority value to the first user
204
take the first resource block as a center, and perform an adjacent resource block extension for the first user to obtain multiple single-user paths
205
combine the single-user paths of the first user and single-user paths of other uses which are previously allocated to obtain multiple candidate paths
206
whether an allocation end condition is met
Y
N
207
remove users having been scheduled and resource blocks having been allocated from a ranking list, re-rank priority functions of remaining users on remaining resource blocks
208
calculate a sum of priority values of each candidate path of which the allocation has been finished, select a candidate path with a maximum sum among all candidate paths, and schedule resources according to an allocation result of the candidate path selected
end

FIG.2

start
a base station configures a priority function for each user on each resource block
301
rank the priority functions of all users on all resource blocks from high to low
302
find a maximum priority function, determine a first resource block corresponding to the maximum priority function, and configure a maximum user and a second maximum user
303
allocate a single-user path for the maximum user and the second maximum user, respectively
304
combine the single-user paths corresponding to the user start-points determined by different resource blocks to obtain multiple candidate paths
305
whether an allocation end condition is met
306
N
delete the users having been scheduled and the resource blocks having been allocated from a ranking list, re-rank the priority values of the remaining users on the remaining resource blocks
307
Y
calculate a sum of priority values of each candidate path, select a path with a maximum sum from all candidate paths, schedule resources according to a resource allocation result of the path with the maximum sum
308
end

FIG.3

1
(UE4, RB1)
2
(UE1, RB1)
3
(UE3, RB5)
4
(UE1, RB5)
5
(UE4, RB2)
6
(UE3, RB2)
7
(UE1, RB3)
8
(UE2, RB3)
9
(UE3, RB4)
10
(UE2, RB4)
11
(UE3, RB5)
12
(UE2, RB5)
13
(UE4, RB6)
14
(UE2, RB6)
15
(UE2, RB6)
16
(UE3, RB3)
17
(UE3, RB4)
18
(UE2, RB6)

FIG.4

start
a base station measures a priority function for each user on each resource block
501
rank priority functions of all users on all resource blocks from high to low
502
allocate a first resource block corresponding to a maximum priority function to a maximum user
503
find a second maximum user and allocate the first resource block to the second maximum user
504
505
with respect to the maximum user, determine which adjacent resource blocks of the first resource block can be allocated to the maximum user
515
with respect to the second maximum user, determine which adjacent resource blocks of the first resource block can be allocated to the second maximum user
525
Path 1
5161
allocation finished?
Y
end
N
5171
remove the priority values of the maximum user and the priority values of the resource blocks having been allocated from a ranking list, re-rank the remaining priority values
Path i
5162
allocation finished?
Y
end
N
5172
remove the priority values of the maximum user and the priority values of the resource blocks having been allocated from a ranking list, re-rank the remaining priority values
Path 1
5261
allocation finished?
Y
end
N
5271
remove the priority values of the second maximum user and the priority values of the resource blocks having been allocated from a ranking list, re-rank the remaining priority values
Path j
5262
allocation finished?
Y
end
N
5272
remove the priority values of the second maximum user and the priority values of the resource blocks having been allocated from a ranking list, re-rank the remaining priority values


FIG.5